# FASCICULE DE BREVET EUROPEEN

(11) **EP 2 785 619 B1**
(45) Date de publication et mention de la délivrance du brevet: **09.12.2020**
(21) Numéro de dépôt: 12781042.2
(22) Date de dépôt: 01.11.2012
(51) Int. Cl.: B65G 15/10, B65G 23/26, B65G 47/68, B26F 3/00

(54) **UNITE DE CONVOYAGE DE PAQUETS POUR UNE UNITE DE TRANSFORMATION D'ELEMENTS EN PLAQUE DANS UNE LIGNE DE PRODUCTION D'EMBALLAGES**
FÖRDEREINHEIT FÜR EINE VERARBEITUNGSEINHEIT VON PLATTENELEMENTEN IN EINER PRODUKTIONSLINIE VON VERPACKUNGEN
CONVEYING UNIT FOR A UNIT FOR TRANSFORMING ELEMENTS IN PLATE FORM IN A PACKAGING PRODUCTION LINE

(30) Priorité: 01.12.2011 EP 11009509
(43) Date de publication de la demande: 08.10.2014
(73) Titulaire: BOBST MEX SA, 1031 Mex (CH)
(72) Inventeur: GAILLARD, Olivier, CH-1433 Suchy (CH); LUCAS, Jean-Jacques, F-33124 Savignac (FR)
(74) Mandataire: Navarro, Asa Maria Thérèse
(86) Numéro de dépôt international: PCT/EP2012/004561
(87) Numéro de publication internationale: WO 2013/079144

(56) Documents cités:
- EP-A1- 0 509 153
- EP-A1- 2 380 830
- EP-A2- 1 369 213
- DE-A1-102008 023 321

## Description

La présente invention concerne une unité de convoyage pour paquets, destinée à une unité de transformation d'un élément en plaque. L'invention se rapporte également à une unité pour transformer un élément en plaque comprenant une unité convoyant les paquets dans une ligne de production d'emballages.

Une ligne de production d'emballages est destinée à la fabrication de boîtes pliantes, qui formeront des emballages après pliage et collage dans une machine plieuse-colleuse. Des éléments en plaque de départ, tels que des feuilles de carton, par exemple du carton ondulé, sont le plus souvent préalablement imprimés par une machine d'impression, de façon à assurer l'attrait visuel de l'emballage final.

Une unité de transformation, telle qu'une unité de découpe, par exemple une découpe à platine, est installée en aval de la machine d'impression. Les éléments en plaque sont introduits par une station d'alimentation montée en amont de l'unité de découpe. Après découpe et éjection des zones de déchet, les boîtes obtenues sont prêtes à l'emploi et sortent sous la forme de piles ou paquets. Ces paquets sont récupérés à la sortie de l'unité dans une station de réception installée en aval.

Selon les dimensions des boîtes souhaitées, les éléments en plaque peuvent sortir de la découpe sous forme de poses. Les poses sont composées de plusieurs boîtes juxtaposées, et rattachées entre elles par des points d'attache. Les points d'attache relient deux bords d'une ligne de coupe entre deux boîtes et constituent des ponts de même matière que les boîtes et les poses. Les poses sont ensuite introduites dans une unité de séparation ou « breaker », par exemple analogue à celle décrite dans le document EP-1,369,213, cassant les points d'attache, de façon à obtenir les boîtes individualisées. Après séparation, les boîtes obtenues sont prêtes à l'emploi et sortent sous la forme de paquets juxtaposés. Ces paquets sont récupérés à la sortie du séparateur dans une station de réception prévue en aval.

### Etat de la technique

Les paquets doivent souvent être convoyés d'un point à un autre dans la ligne de production, soit pour alimenter ensuite la plieuse-colleuse, soit pour être palettisés, soit pour être cerclés ou être emballés avant livraison. Le plus souvent, un opérateur intervient pour transporter à la main ou pour pousser les paquets souhaités sur des convoyeurs. Pour effectuer cette opération de convoyage, des convoyeurs motorisés du type à bande ou à rouleaux sont également utilisés.

Les documents DE 10 2008 023 321, EP 2 380 830 et EP 1 184 310 divulguent une unité de convoyage comprenant:
- un premier moyen de transport et au moins un deuxième moyen de transport, les moyens de transport étant adjacents et parallèles entre eux et aptes à transporter des objets selon la direction longitudinale;
- des moyens d'entraînement pour entraîner les moyens de transport, chaque moyen de transport comprenant un agencement d'entraînement pour entraîner le moyen de transport, l'agencement d'entraînement comprenant des moyens d'accouplement aptes à coopérer avec les moyens d'entraînement et des moyens d'actionnement aptes à accoupler et désaccoupler les moyens d'accouplement avec les moyens d'entraînement de façon à faire transporter les objets supportés par les moyens de transport dont les moyens d'accouplement sont accouplés aux moyens d'entraînement et à laisser sensiblement immobiles les objets supportés par les moyens de transport dont les moyens d'accouplement sont désaccouplés des moyens d'entraînement.

### Exposé de l'invention

Un objectif principal de la présente invention consiste à mettre au point une unité de convoyage permettant d'améliorer le transport des paquets arrivant en sortie de l'unité de transformation. Un deuxième objectif est de réaliser une unité de convoyage qui soit adaptable à tous types de dimensions de paquets. Un troisième objectif est de prévoir une unité convoyant les paquets, permettant d'éviter les inconvénients des systèmes de l'état de la technique. Un autre objectif encore est celui d'équiper une unité de transformation d'éléments en plaque avec une unité de convoyage.

Conformément à un aspect de la présente invention, ces objectifs sont réalisés par l'unité de convoyage pour paquets de la revendication 1.

Un paquet est défini comme étant un paquet isolé ou un lot de plusieurs paquets. Un paquet est défini comme étant formé à partir d'éléments plats empilés ou juxtaposés. Un paquet est constitué avec des éléments en plaque, des feuilles, des poses, des découpes des boîtes pliantes, ou d'autres encore, notamment sortant de l'unité de transformation et de la ligne de production d'emballages. Les éléments plats, plus spécifiquement pour l'emballage, sont en un matériau tel que du papier, du carton plat, du carton ondulé, du plastique flexible, ou d'autres encore.

Autrement dit, l'unité assure le déplacement d'un premier paquet par rapport à un autre deuxième paquet. Le deuxième paquet reste immobile sur son deuxième moyen de transport, tandis que le premier paquet est transporté par son premier moyen de transport. Le deuxième paquet ne bouge pas car le deuxième moyen de transport est désaccouplé du premier moyen de transport.

Les moyens d'actionnement permettent de désaccoupler le deuxième moyen de transport du premier moyen de transport et ainsi des moyens d'entraînement. Lorsque le deuxième moyen de transport est désaccouplé du premier moyen de transport, seul le premier moyen de transport reste entraîné. Le deuxième paquet peut être traité plus loin dans la suite de la ligne de production d'emballages. Le convoyeur de l'invention permet de gérer séparément le déplacement de nombreux paquets. Des premiers lots de paquets sont déplacés successivement, tandis que des deuxièmes lots de paquets restent immobiles.

Dans un autre aspect de l'invention, une unité de transformation d'éléments en plaque, telle qu'une unité de découpe équipée avec une station de réception, dans une ligne de production d'emballages, est définie par les caractéristiques de la revendication 10. L'unité de convoyage est positionnée en aval de la station de réception.

La direction longitudinale est définie en faisant référence au sens de défilement ou d'entraînement des paquets dans l'unité et également dans l'unité transformation ainsi qu'éventuellement dans la ligne de production d'emballages selon leur axe longitudinal médian. La direction transversale est définie comme étant la direction perpendiculaire à la direction de défilement des paquets. Les positions amont et aval sont définies par rapport à la direction longitudinale et au sens de défilement de l'entrée de l'unité jusqu'à la sortie de l'unité.

### Brève description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels:
- la Figure 1 représente une vue en perspective partielle d'une unité de transformation avec une unité de convoyage selon l'invention;
- la Figure 2 représente vue en perspective partielle de l'unité de transformation avec l'unité de convoyage de la Figure 1, montrant des paquets transportés;
- la Figure 3 représente une vue en perspective de l'unité de convoyage;
- la Figure 4 représente une vue en perspective d'un moyen de transport de l'unité de convoyage selon une première forme de réalisation;
- la Figure 5 représente une vue de côté d'un moyen de transport de l'unité de convoyage selon une deuxième forme de réalisation;
- la Figure 6 représente une vue de face partielle en éclaté de l'unité de convoyage;
- les Figures 7 à 9 représentent des vues du dessus montrant différentes positions des moyens d'actionnement de l'unité de convoyage.

### Exposé détaillé de modes de réalisation préférés

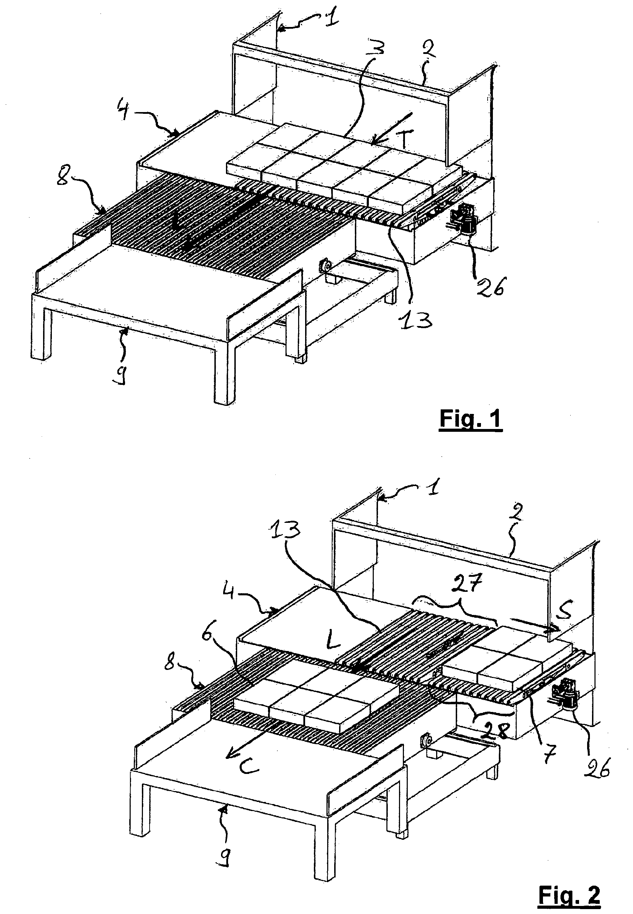

Une ligne de production d'emballages sous la forme de boîtes de carton comprend une unité de transformation, telle qu'une presse de découpe à platine. Comme l'illustrent les Figures 1 et 2, une unité de séparation 1 est montée en aval de la presse. L'unité de séparation 1 comprend une station de réception 2. Des boites sortent longitudinalement par un convoyeur ou tapis à bande sans fin de la station de réception 2 sous la forme de paquets ou piles 3.

Dans cet exemple, un élément en plaque, i.e. une feuille de carton, est découpé par la presse et est transformé en dix boîtes juxtaposées. Une pile d'éléments en plaque de départ génère ainsi dix piles de boîtes juxtaposées 3, disposées en deux rangées successives de cinq piles. Toutes les piles 3 sont amenées longitudinalement (Flèche T en Figure 1) sur une unité de convoyage 4, montée en aval de la station de réception 2.

L'unité de convoyage 4 met en œuvre une gestion des piles 3. Comme cela est montré en Figure 2 à titre d'exemple, une possibilité de gestion des dix piles 3 consiste par exemple à faire avancer longitudinalement (Flèches L dans les Figures 1 et 2) six piles 6, tout en laissant quatre piles immobiles 7. Les six piles mobiles 6 sont envoyées par l'unité de convoyage 4 vers et sur une deuxième table de convoyage 8. Les six piles mobiles 6 sont ensuite envoyées longitudinalement (Flèche C en Figure 2) par la table de convoyage 8 vers et sur une table de réception 9, pour être traitées immédiatement en aval dans la suite de la ligne de production d'emballages (non représentée).

Ce n'est qu'une fois que les six piles mobiles 6 ont été évacuées C dans la suite de la ligne de production d'emballages, que les quatre piles immobiles 7 sont par exemple envoyées par l'unité de convoyage 4 vers et sur la deuxième table de convoyage 8, puis vers et sur la table de réception 9, et enfin dans la suite de la ligne de production d'emballages.

Ces séquences d'opération de convoyage différenciées peuvent être réalisées selon la programmation effectuée par l'opérateur de la presse de découpe à platine et de l'unité de séparation 1, en fonction des différents formats de boîtes, du nombre de piles à traiter en premier lieu, et du nombre de piles à traiter en second etc.

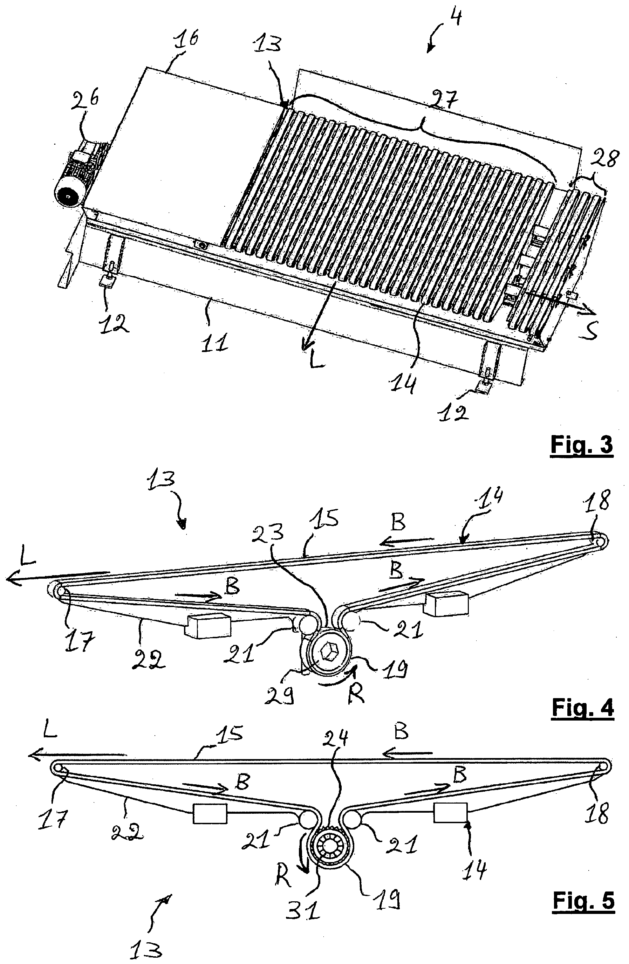

L'unité de convoyage 4 comprend (voir Figure 3) un bâti 11 monté sur pieds 12. L'unité de convoyage 4 comprend trente moyens de transport 13 formant une surface de maintien et de transfert pour piles 3, 6 et 7, sensiblement horizontale, et située en partie supérieure du bâti 11.

Les moyens de transport 13 sont avantageusement formés par des rampes de convoyage 14 à bandes sans fin 15, ici au nombre de vingt-neuf. Les moyens de transport 13 sont également formés par un tapis sans fin 16, placé au niveau de l'un des côtés latéraux du bâti 11 et de l'unité de convoyage 4. Les bandes 15 et donc les rampes 14 sont toutes identiques, disposées en long successivement les unes à côté des autres, adjacentes et parallèles entre elles. Le tapis 16 est parallèle aux bandes 15. Les bandes 15 et le tapis 16 défilent longitudinalement (Flèches B en Figures 4 et 5) et sont aptes à transporter L les paquets 3, 6 et 7 selon la direction longitudinale.

Les moyens de transport 13, rampes 14 et tapis 16, comprennent un renvoi amont 17, un renvoi aval 18, un agencement d'entraînement principal inférieur 19, et deux renvois de maintien 21 plaquant la bande 15 contre l'agencement d'entraînement 19. Les renvois 17, 18 et 21 peuvent être également remplacés par des pignons. Le renvoi amont 17 et le renvoi aval 18 maintiennent la bande 15 à l'horizontal, de façon à former la surface supérieure de maintien et de transfert pour les paquets 3, 6 et 7. Les moyens de transport 13, rampes 14 et tapis 16, comprennent une structure de maintien 22 à laquelle sont fixés les renvois 17, 18 et 21 et l'agencement d'entraînement 19.

L'agencement d'entraînement 19 permet le défilement B de la bande 15 et permet le transport dans le sens longitudinal L. Dans une première forme de réalisation (voir Figure 4), l'agencement d'entraînement 19 est formé avec une poulie d'entraînement 23 entraînant la bande 15. Dans une deuxième forme de réalisation (voir Figure 5), l'agencement d'entraînement 19 est formé avec un pignon d'entraînement 24 entraînant la bande 15.

L'unité de convoyage 4 comprend des moyens d'entraînement, de type moteur électrique 26, entraînant en rotation (Flèche R en Figures 4 et 5) l'agencement d'entraînement 19, ce qui fait défiler B les bandes 15. Le moteur 26 est fixé sur le bâti 11, au niveau du côté latéral situé à proximité du tapis 16.

L'unité de convoyage 4 fait transporter L selon la direction longitudinale un premier paquet, i.e. les piles mobiles 6, avec le premier moyen de transport. Les piles mobiles 6 sont ainsi posées sur et transportées par une première série 27 de rampes 14. L'unité de convoyage 4 laisse immobile un deuxième paquet, i.e. les piles immobiles 7, avec le deuxième moyen de transport. Les piles immobiles 7 sont ainsi posées sur et transportables par une deuxième série 28 de rampes 14. La ou les rampes de la première série 27 et la ou les rampes de la deuxième série 28 sont adjacentes entre-elles.

Le nombre de rampes 14 de la première série 27 et de la deuxième série 28 est variable, en fonction de la largeur des piles transportées 6 ou immobiles 7. Le nombre de rampes 14 de la première série 27 peut être égal à zéro et le nombre de rampes 14 de la deuxième série 28 égal à vingt-neuf, dans le cas où seul le tapis 16 transporte une ou plusieurs piles 6. A l'inverse, le nombre de rampes 14 de la première série 27 peut être égal à vingt-neuf et le nombre de rampes 14 de la deuxième série 28 égal à zéro, dans le cas où toutes les piles 6 doivent être transportées.

Toutes les variations intermédiaires pour les rampes 14 de la première série 27 et pour les rampes 14 de la deuxième série 28 sont possibles, en fonction des piles 6 et 7 et de ce que l'opérateur souhaite en faire. De manière favorable, seul le tapis 16 reste latéralement fixe au niveau du côté latéral de l'unité de convoyage 4.

Pour interrompre le transport L, la deuxième série 28 de rampes 14 est désaccouplée de la première série 27 de rampes 14. De ce fait, la deuxième série 28 n'est plus entraînée par le moteur 26 et ses bandes correspondantes 15 ne défilent plus longitudinalement. A l'inverse, la deuxième série 28 de rampes 14 peut à nouveau être accouplée à la première série 27 de rampes 14.

Selon l'invention, l'unité de convoyage 4 comprend des moyens d'actionnement laissant longitudinalement immobiles les rampes 14 de la deuxième série 28 avec leurs piles immobiles 7, par rapport aux rampes 14 de la première série 27 avec leurs piles 6.

Les moyens d'actionnement comprennent tout d'abord préférentiellement des moyens d'accouplement montés sur une rampe 14 de la première série 27, qui est latéralement la plus éloignée du moteur 26 et du tapis 16, et qui doit être encore entraînée. Ces moyens formant un accouplement sont aptes à coopérer avec des moyens formant un accouplement conjugués montés sur une rampe 14 de la deuxième série 28, qui est immédiatement contigüe, et qui est la première qui ne doit pas être entraînée.

Les moyens d'accouplement de la première forme de réalisation comprennent un embrayage électromécanique 29 (voir Figure 4). Ces moyens d'accouplement, i.e. l'embrayage électromécanique 29, font préférentiellement parties de l'agencement d'entraînement 19, i.e. de la poulie 24. La surface de l'embrayage électromécanique 29 est orientée sensiblement perpendiculairement à l'axe de rotation de la poulie 24. La position de l'embrayage électromécanique 29 permet à une rampe 14 d'être mécaniquement accouplée et désaccouplée avec la rampe qui précède et avec la rampe qui suit dans la série.

Comme cela est visible dans les Figures 5 à 9 et de manière favorable pour la deuxième forme de réalisation, les moyens d'accouplement comprennent un crabot 31 à dents orientées latéralement 32. Ces moyens d'accouplement, i.e. le crabot 31, font préférentiellement parties de l'agencement d'entraînement 19, i.e. du pignon d'entraînement 24. Les dents du crabot 31 sont orientées sensiblement perpendiculairement à la denture du pignon d'entraînement 24. Le crabot 31 de la rampe 14 possède deux jeux opposés de dents 32, un jeu sur chacune des deux faces du pignon d'entraînement 24. La position des dents 32 permet à une rampe 14 d'être mécaniquement accouplée et désaccouplée avec la rampe qui précède et avec la rampe qui suit dans la série.

De cette manière, une rampe 14 ou une deuxième série 28 de rampes 14 est désaccouplée de la dernière rampe 14 de la première série 27 par déconnexion des embrayages 19 de la première forme de réalisation ou des crabots respectifs 31 de la deuxième forme de réalisation.

Dans la première forme de réalisation, les moyens d'accouplement, i.e. l'embrayage électromécanique 29 associé à la poulie 23, sont montés sur un arbre transversal 33, qui les entraîne en rotation R. Dans la deuxième forme de réalisation, les moyens d'accouplement, i.e. les crabots 31 associés au pignon d'entraînement 24, sont montés sur un arbre transversal 33, sur lequel ils sont aptes à tourner R. Le moteur 26 entraîne en rotation R l'entraînement 24 du tapis 16 et le mouvement de rotation R est mécaniquement transmis à tous les agencements d'entraînement 19, 29 et 31 de la première série de rampes 24 via la succession des embrayages 19 de la première forme de réalisation ou des crabots 31 de la deuxième forme de réalisation. Ce mouvement de rotation R est interrompu par le découplage de la deuxième série de rampes 26.

L'unité de convoyage 4 assure un décalage latéral de la première pile 6 par rapport à la deuxième pile 7 (visible en Figure 2). Ce décalage permet d'éviter que les deux piles 6 et 7 restent ensemble directement l'une à côté de l'autre et se touchent. Lorsque la première pile 6 commence à être transporté par sa première série 27 de rampes 14, elle ne vient pas accrocher et défaire la deuxième pile 7.

Pour obtenir ce décalage, la deuxième série 28 de rampes 14 est apte à être écartée latéralement (Flèche S dans les Figures 2, 3 et 8) de la première série 27 de rampes 14. L'écartement S d'une série 28 de rampes 14 par rapport à l'autre 27 génère un écart entre les piles déplacées 6 et les piles restant immobiles 7. A l'inverse, la ou les rampes 14 constituant la deuxième série 28 peuvent être rapprochées latéralement de la ou des rampes 14 constituant la première série 27.

Pour obtenir la séparation S, les moyens d'actionnement comprennent ensuite préférentiellement des moyens d'écartement, aptes à écarter et à rapprocher latéralement S le deuxième moyen de transport avec la deuxième série 28 de rampes 14 du premier moyen de transport avec la première série 27 de rampes 14. De cette manière et dans la première forme de réalisation, une rampe 14 ou une deuxième série 28 de rampes 14 est écarté de la dernière rampe 14 de la première série 27 par désaccouplement des embrayages respectifs 29 suivi par un coulissement latéral S. De cette manière et dans la deuxième forme de réalisation, une rampe 14 ou une deuxième série 28 de rampes 14 est écarté de la dernière rampe 14 de la première série 27 par coulissement latéral S engendrant un désaccouplement des crabots respectifs 31.

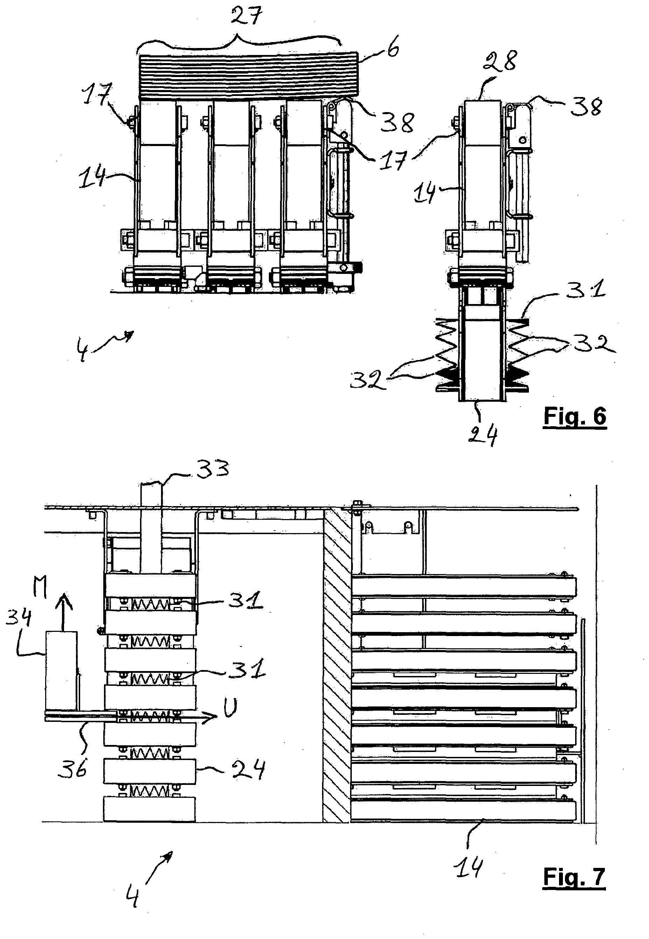

Les moyens d'écartement de l'unité de convoyage 4 comprennent favorablement un chariot ou élément mobile 34. L'élément mobile 34 est apte à se déplacer et à se positionner au niveau de la dernière rampe 14 de la première série 27 et de la première rampe 14 de la deuxième série 28. L'élément mobile 34 a pour fonction de désaccoupler et d'écarter latéralement S la deuxième série 28 de rampes 14 de la première série 27 de rampes 14. Les Figures 7 à 9 montrent les phases de séparation entre deux séries 27 et 28 de rampes 14.

Pour ce faire, l'élément mobile 34 est apte à être déplacé (Flèche M en Figure 7) par exemple en étant monté coulissant sur une coulisse transversale. La coulisse est parallèle à l'arbre transversal 33. L'élément mobile 34 est déplacé M par exemple grâce à un système à courroie entraînée par moteur.

L'élément mobile 34 se positionne pour prendre une position latérale sensiblement entre la première rampe 14 devant être déconnectée de la deuxième série 28 et la dernière rampe connectée et entraînée de la première série 27. La position est déterminée en fonction du nombre de rampes 14 devant être non seulement désolidarisées mais en plus écartées latéralement S.

L'élément mobile 34 comprend un écarteur, sous la forme d'une fourche 36. L'élément mobile 34 se déplace longitudinalement (Flèche U en Figure 7), de façon à ce que la fourche 36 s'insère longitudinalement entre deux rampes 14. La fourche 36 s'insère par exemple au niveau des deux pignons d'entraînement 24 et de leur crabot 31. L'élément mobile 34 est poussé U par vérin.

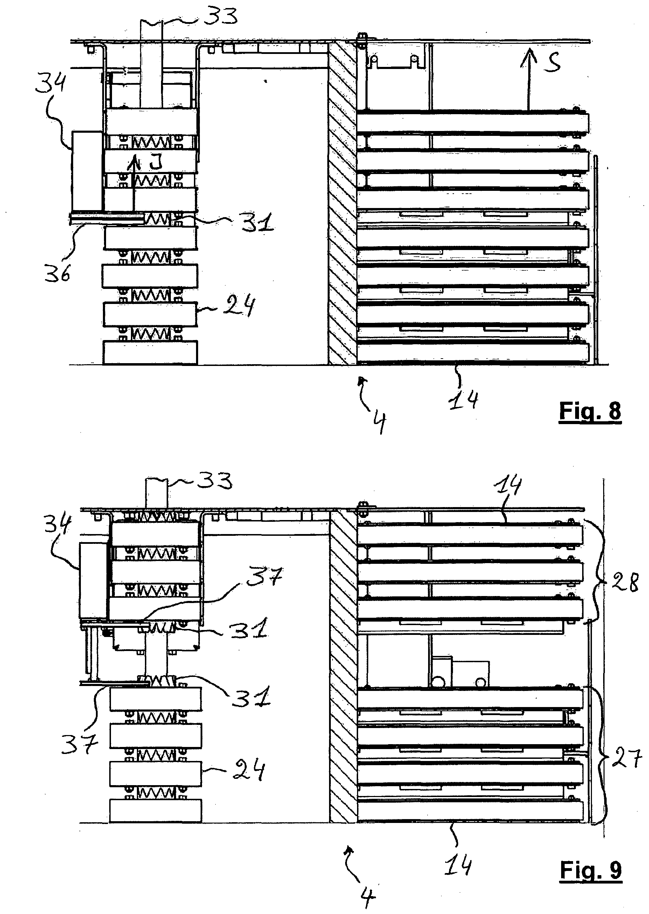

La fourche 36 comprend avantageusement deux doigts 37. Chacun des deux doigts 37 est apte à venir en butée contre les rampes 14 devant être écartées, au niveau des deux pignons d'entraînement 24 et de leur crabot 31 ou au niveau de la structure de maintien 22. Les doigts 37 s'écartent latéralement l'un de l'autre en étant repoussés (Flèche J en Figure 8) par un vérin. L'écartement J des doigts 37 conduit à un désaccouplement mécanique des crabots 31 et à une désolidarisation de la deuxième série 28 de rampe 14 (voir Figure 9).

Les rampes 14 peuvent comprendre un élément de levage latéral 38 de la pile transportée 6, de façon à soulever et à soutenir le rebord de cette pile 6 (voir Figure 6). L'élément de levage 38 est particulièrement utile lorsque la pile 6 présente une largeur supérieure à la largeur de plusieurs rampes juxtaposées 14, alors que le rajout d'une rampe supplémentaire 14 ne donne aucun support pour la pile 6.

La présente invention n'est pas limitée aux modes de réalisation décrits et illustrés. De nombreuses modifications peuvent être réalisées, sans pour autant sortir du cadre défini par la portée du jeu de revendications.

## Revendications

1. Unité de convoyage pour paquets, destinée à une unité de transformation d'un élément en plaque, comprenant:
- un premier moyen de transport et au moins un deuxième moyen de transport, les moyens de transport étant adjacents et parallèles entre eux (13, 14, 16) et aptes à transporter (L) les paquets (3, 6) selon la direction longitudinale, chaque moyen de transport comprenant un agencement d'entraînement (19) pour entraîner le moyen de transport, l'agencement d'entraînement (19) comprenant des moyens d'accouplement (31) aptes à coopérer avec les moyens d'accouplement conjugués (31) de l'agencement d'entraînement (19) du ou des moyens de transport adjacents, chaque moyen de transport étant apte à coulisser latéralement (S);
- des moyens d'entraînement (26) pour entraîner en rotation (R) l'agencement d'entraînement (19) du premier moyen de transport (14, 27) lorsque les moyens d'entraînement (26) et l'agencement d'entraînement (19) du premier moyen de transport (14, 27) sont accouplés, et
- des moyens d'écartement aptes à écarter ou à rapprocher par coulissement latéral un nombre sélectif de moyens de transports adjacents (28) du reste de moyens de transports adjacents (27), ledit nombre pouvant représenter l'ensemble des moyens de transport lorsque l'ensemble des moyens de transport adjacents est écarté ou rapproché par coulissement latéral du moyen d'entraînement (26), de façon à faire transporter (L) un premier paquet (6) supporté par un premier groupe de moyens de transport adjacents (27) selon la direction longitudinale et à laisser sensiblement immobile longitudinalement un deuxième paquet (7) supporté par un deuxième groupe de moyens de transport adjacents (28), lorsque le deuxième groupe de moyens de transport adjacents (28) est écarté et donc désaccouplé du premier groupe de moyens de transport adjacents (27) entraînés par les moyens d'entraînement (26).

2. Unité selon la revendication 1, **caractérisée en ce que** les moyens d'accouplement comprennent un crabot (31) à dents orientées latéralement (32).

3. Unité selon la revendication 1 ou 2, **caractérisée en ce que** les moyens d'écartement comprennent un élément mobile (34), apte à se déplacer.

4. Unité selon la revendication 3 **caractérisée en ce que** l'élément mobile (34) est monté de façon à coulisser transversalement et à prendre une position latérale, fonction du nombre de moyens de transport (14, 28) devant être désaccouplés et écartés latéralement.

5. Unité selon la revendication 3 ou 4, **caractérisée en ce que** l'élément mobile (34) comprend un écarteur (36), apte à s'insérer longitudinalement entre deux moyens de transport (14) au niveau des moyens d'accouplement (29, 31).

6. Unité selon la revendication 5, **caractérisée en ce que** l'écarteur (36) comprend deux doigts (37), aptes à venir en butée chacun contre les moyens de transport (14) au niveau des moyens d'accouplement (29, 31), et à s'écarter latéralement.

7. Unité selon l'une quelconque des revendications précédentes, **caractérisée en ce que** les moyens de transport (14) comprennent un élément de levage latéral (38) du paquet transporté (6).

8. Unité selon l'une quelconque des revendications précédentes, **caractérisée en ce qu'**elle comprend au moins un moyen de transport, latéralement fixe (16) et placés au niveau de l'un des côtés latéraux.

9. Unité selon l'une quelconque des revendications précédentes, **caractérisée en ce que** les moyens de transport se présentent sous la forme de rampes de convoyage (14) à bande sans fin (15).

10. Unite de transformation d'éléments en plaque, telle qu'une unité de découpe équipée avec une station de réception (2), dans une ligne de production d'emballages, **caractérisée en ce qu'**elle comprend une unité de convoyage (4) selon l'une quelconque des revendications précédentes, positionnée en aval de la station de réception (2).

## Patentansprüche

1. Einheit zur Förderung von Paketen, die für eine Einheit zur Transformation von einem Element in eine Platte bestimmt ist, umfassend:
- ein erstes Transportmittel und mindestens ein zweites Transportmittel, wobei die Transportmittel zueinander (13, 14, 16) benachbart und parallel sind und angepasst sind Pakete (3, 6) in Längsrichtung zu transportieren (L), wobei jedes Transportmittel eine Antriebsanordnung (19) umfasst, um das Transportmittel anzutreiben, wobei die Antriebsanordnung (19) Kopplungsmittel (31) umfasst, die angepasst sind, mit den verbundenen Kopplungsmitteln (31) der Antriebsanordnung (19) des oder der benachbarten Transportmittel zusammenzuwirken, wobei jedes Transportmittel angepasst ist seitlich zu gleiten (S);
- Antriebsmittel (26), um die Antriebsanordnung (19) des ersten Transportmittels (14, 27) in Rotation (R) anzutreiben, wenn die Antriebsmittel (26) und die Antriebsanordnung (19) des ersten Transportmittels (14, 27) gekoppelt sind, und
- Beabstandungsmittel, die angepasst sind, eine ausgewählte Anzahl von benachbarten Transportmitteln (28) von dem Rest der benachbarten Transportmittel (27) durch seitliches Gleiten zu beabstanden oder an diesen anzunähren, wobei die Anzahl die Gesamtheit der Transportmittel darstellen kann, wenn die Gesamtheit der benachbarten Transportmittel durch seitliches Gleiten von dem Antriebsmittel (26) beabstandet oder an dieses angenähert wird, um ein erstes Paket (6), das von einer ersten Gruppe von benachbarten Antriebsmitteln (27) getragen wird, in der Längsrichtung transportieren (L) zu lassen und ein zweites Paket (7), das von einer zweiten Gruppe von benachbarten Transportmitteln (28) getragen wird, im Wesentlichen längs unbeweglich zu lassen, wenn die zweite Gruppe von benachbarten Transportmitteln (28) beabstandet ist und somit von der ersten Gruppe von benachbarten Transportmitteln (27) entkoppelt ist, die von den Antriebsmitteln (26) angetrieben werden.

2. Einheit nach Anspruch 1, **dadurch gekennzeichnet, dass** die Kupplungsmittel eine Klauenkupplung (31) mit seitlich ausgerichteten Zähnen (32) umfassen.

3. Einheit nach Anspruch 1 oder 2, **dadurch gekennzeichnet, dass** die Beabstandungsmittel ein bewegliches Element (34) umfassen, das angepasst ist sich zu bewegen.

4. Einheit nach Anspruch 3, **dadurch gekennzeichnet, dass** das bewegliche Element (34) so montiert ist, dass es quer gleitet und eine seitliche Position einnimmt, abhängig von der Anzahl der Transportmittel (14, 28), die entkoppelt und seitlich beabstandet sein sollen.

5. Einheit nach Anspruch 3 oder 4, **dadurch gekennzeichnet, dass** das bewegliche Element (34) einen Abstandshalter (36) umfasst, der angepasst ist, in Längsrichtung zwischen zwei Transportmitteln (14) bei den Kupplungsmitteln (29, 31) eingesetzt zu werden.

6. Einheit nach Anspruch 5, **dadurch gekennzeichnet, dass** der Abstandshalter (36) zwei Finger (37) umfasst, die angepasst sind, jeweils bei den Kupplungsmitteln (29, 31) gegen die Transportmittel (14) zu stoßen und seitlich beabstandet zu sein.

7. Einheit nach einem der vorhergehenden Ansprüche, **dadurch gekennzeichnet, dass** die Transportmittel (14) ein seitliches Hubelement (38) für das transportierte Paket (6) umfassen.

8. Einheit nach einem der vorhergehenden Ansprüche, **dadurch gekennzeichnet, dass** sie mindestens ein Transportmittel umfasst, das seitlich befestigt (16) und bei einer der seitlichen Seiten angeordnet ist.

9. Einheit nach einem der vorhergehenden Ansprüche, **dadurch gekennzeichnet, dass** die Transportmittel in Form von Förderrampen (14) mit einem Endlosband (15) vorliegen.

10. Einheit zur Transformation von Elementen in Platten, wie beispielsweise eine Schneideinheit, die mit einer Aufnahmestation (2) in einer Linie zur Produktion von Verpackungen ausgestattet ist, **dadurch gekennzeichnet, dass** sie eine Einheit zur Förderung (4) gemäß einem der vorhergehenden Ansprüche umfasst, die stromabwärts von der Aufnahmestation (2) positioniert ist.

## Claims

1. Conveying unit for packages, intended for a sheet-like element conversion unit, comprising:
- a first transport means and at least one second transport means, the transport means being adjacent and parallel to one another (13, 14, 16) and able to transport (L) the packages (3, 6) in the longitudinal direction, each transport means comprising a drive arrangement (19) to drive the transport means, the drive arrangement (19) comprising coupling means (31), able to engage with the conjugated coupling means (31) of the drive arrangement (19) of the adjacent transport means, each transport means being able to slide laterally (S);
- drive means (26) for rotating (R) the drive arrangement (19) of the first transport means (14, 27) when the drive means (26) and the drive arrangement (19) of the first transport means (14, 27) are coupled, and
- deviation means able to deviate or to move closer by lateral sliding a selective number of adjacent transport means (28) of the remainder of adjacent transport means (27), said number being able to represent all of the transport means when all of the adjacent transport means are deviated or moved closer by lateral sliding of the drive means (26), so as to make a first package (6) supported by a first group of adjacent transport means (27) transport (L) in the longitudinal direction and to leave substantially immobile longitudinally, a second package (7) supported by a second group of adjacent transport means (28), when the second group of adjacent transport means (28) is deviated and therefore uncoupled from the first group of adjacent transport means (27) driven by the drive means (26).

2. Unit according to claim 1, **characterised in that** the coupling means comprise a claw (31) with teeth oriented laterally (32).

3. Unit according to claim 1 or 2, **characterised in that** the deviation means comprise a mobile element (34), able to be moved.

4. Unit according to claim 3, **characterised in that** the mobile element (34) is mounted so as to slide transversally and to take on a lateral position, according to the number of transport means (14, 28) needing to be uncoupled and deviated laterally.

5. Unit according to claim 3 or 4, **characterised in that** the mobile element (34) comprises a deviator (36), able to be inserted longitudinally between two transport means (14) at the level of the coupling means (29, 31).

6. Unit according to claim 5, **characterised in that** the deviator (36) comprises two fingers (37), able to each abut against the transport means (14) at the level of the coupling means (29, 31), and to be deviated laterally.

7. Unit according to any one of the preceding claims, **characterised in that** the transport means (14) comprises a lateral lifting element (38) of the package transported (6).

8. Unit according to any one of the preceding claims, **characterised in that** it comprises at least one transport means, laterally fixed (16) and placed at the level of one of the lateral sides.

9. Unit according to any one of the preceding claims, **characterised in that** the transport means are presented in the form of conveyor rails (14) with an endless conveyor belt (15).

10. Unit for converting sheet-like elements, such as a cutting unit equipped with a receiving station (2), in a packaging production line, **characterised in that** it comprises a conveying unit (4) according to any one of the preceding claims, positioned downstream from the receiving station (2).
